(19) Europäisches Patentamt
European Patent Office
Office européen des brevets

(11) EP 1 134 036 A2

(12) **EUROPEAN PATENT APPLICATION**

(43) Date of publication:
19.09.2001 Bulletin 2001/38

(51) Int Cl.⁷: **B05D 7/00**, B05D 1/36

(21) Application number: 01103369.3

(22) Date of filing: 13.02.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **17.03.2000 JP 2000076818**

(71) Applicant: **Mazda Motor Corporation**
**Aki-gun, Hiroshima 735-8670 (JP)**

(72) Inventors:
• **Yamane, Takakazu**
**Aki-gun, Hiroshima 735-8670 (JP)**
• **Kubota, Hiroshi**
**Aki-gun, Hiroshima 735-8670 (JP)**

(74) Representative: **Müller-Boré & Partner**
**Patentanwälte**
**Grafinger Strasse 2**
**81671 München (DE)**

(54) **Method for treating coating film**

(57) A method for treating coating film is provided, whereby a window glass can be securely bonded to a substrate, even when the substrate has been furnished with a hydrophilized coating film. Before bonding a window glass 14 to a clear top-coat coating film 7 which contains a silicate compound as a hydrophilizing agent, with using a window glass adhesive 16 as an organic adhesive, the clear top-coat coating film 7 is coated with a body primer which contains an organic reactive group reactable with an organic resin and which contains an additive 13 capable of forming a covalent bond CB with the silicate compound in the clear top-coat coating film 7.

*Fig. 3*

## Description

The present invention relates to a method for treating coating film which is employed for bonding an object to a substrate furnished with a hydrophilized coating film.

Recent years have seen the emergence of coatings which contain hydrophilizing agents, as taught in Japanese Patent Laid-Open Publication No. 140077/1998. If these coatings are applied onto a substrate to form a coating film, then hydrophilic property of a surface of the coating film will, when it rains, allow rainwater to penetrate and flow between the film's surface and any polluting substances which have adhered to the surface and enable the rainwater to wash the substances away. The use of such coatings, accordingly, can reduce the amount of washing to be done.

However, should an adhesive be used to bond any other materials on top of the aforedescribed coating film, hydrophilicity of the film's surface will attract water (e.g., rainwater), which will penetrate between the coating film and any primers which are usually applied thereto. The adhesive strength between the primer and the coating film tends to decrease as a result; therefore, the concern arises that substrates furnished with hydrophilized coating films will not allow any materials to be securely bonded thereto.

With the foregoing problem of the prior art in view, it is a technical object of the present invention to provide a method for treating coating films which allows objects, which are to be bonded, to be securely bonded onto a substrate, even if the substrate has been furnished with a hydrophilized coating film.

For the purpose of achieving the aforedescribed technical object, an invention pertaining to claim 1 (the present invention) comprises a method for treating coating film which contains a hydrophilizing agent, to be conducted before an object is bonded to the coating film with an organic adhesive, which comprises a step of applying a primer to the coating film, wherein said primer has an organic reactive group reactable with organic elements, and contains an additive capable of forming a covalent bond with the hydrophilizing agent in the coating film.

For the purpose of achieving the aforedescribed technical object, an invention pertaining to claim 2 (the present invention) comprises a method for treating coating film which contains a hydrophilizing agent, to be conducted before an object is bonded to the coating film with an organic adhesive, which comprises a step of applying a primer to the coating film, wherein said hydrophilizing agent in the coating films is an organosilane compound, and said primer has an organic reactive group reactable with organic elements, and contains an organosilane compound as an additive.

Preferred embodiments pertaining to the aforedescribed claims 1 and 2 are as described in claim 6.

For the purpose of achieving the aforedescribed technical object, an invention pertaining to claim 3 (the present invention) comprises a method for treating coating film which contains a hydrophilizing agent, to be conducted before an object is bonded to the coating film with an organic adhesive, which comprises a step of applying a primer to the coating film, wherein said primer is composed of a first primer which has an organic reactive group reactable with organic elements, and contains an organosilane compound as an additive, and a second primer which has an organic reactive group reactable with organic elements, and contains no organosilane compound.

Preferred embodiments pertaining to the aforedescribed claim 3 are as described in claims 4 to 6.

According to the present invention as defined in claim 1, when a primer is applied on a coating film which contains a hydrophilizing agent before an object is bonded to the coating film with an organic adhesive, the primer contains both organic reactive groups which can react with organic elements and an additive which can form covalent bonds with the hydrophilizing agent within the coating film, so as to ensure not only that the organic reactive groups bond with the organic adhesive, but that the additive in the primer forms covalent bonds with the hydrophilizing agent in said coating film. This will allow the bonding between the primer and the coating film to be securely maintained, even if any water (e.g., rainwater) attracted by the hydrophilicity of the coating film penetrates between the coating film and the primer. Accordingly, any object which is to be bonded to a substrate, can be securely bonded, even if it is provided with a hydrophilized coating film.

According to the present invention as defined in claim 2, when a primer is applied on a coating film which contains a hydrophilizing agent before an object is bonded to the coating film with an organic adhesive, an organosilane compound is used as the hydrophilizing agent in said coating film and the primer used herein contains both organic reactive groups which can react with the organic elements and an organosilane compound as an additive, so as to ensure not only that the organic reactive groups bond with the organic adhesive, but for the coating film and the primer that the organosilane compound in the primer forms with the organosilane compound in said coating film, bonds which are strong enough to resist being broken by a film of water or the like (covalent bonds). This will allow the bonding between the primer and the coating film to be securely maintained, even if any water (e.g., rainwater) attracted by the hydrophilicity of the coating film penetrates between the coating film and the primer. Accordingly, any object which is to be bonded to a substrate, can be securely bonded, even if it is provided with a hydrophilized coating film.

According to the present invention as defined in claim 3, a first primer which contains both organic reactive groups reactable with organic elements and an organosilane compound as an additive, and a second primer which contains organic reactive groups reactable with organic elements but does not contain an organosilane compound, are employed. Therefore, when the organosilane compound, which serves as a hydrophilizing agent, has imparted the coating film with hydrophilic property, bonds which are strong enough to resist being broken by a film of water or the like (covalent bonds) are formed between the coating film and the first primer by the organosilane compound in said coating film and the organosilane compound in said first primer, and the first and the second primers and an organic adhesive all bond together via their respective organic reactive groups. On the other hand, when the coating film has not been imparted with hydrophilic property, the second primer permeates the first primer and effects adhesion (bonding) with the coating film, and the first and the second primers and an organic adhesive all bond together via their respective organic reactive groups. Accordingly, the adhesive can be bonded to the coating film via the first and the second primers not only when the coating film is hydrophilic, but also when the coating film is not hydrophilic, therefore, the primer coating steps can be performed in the same process.

According to the present invention as defined in claim 4, a first primer is applied to a coating film, thereby forming a first primer film on said coating film, and a second primer is applied onto the first primer film, so that the method pertaining to aforedescribed claim 3 is obtained specifically and assuredly.

According to the present invention as defined in claim 5, a first and a second primers are blended together directly prior to being applied to the coating film, so that the method pertaining to aforedescribed claim 3 is obtained specifically and assuredly. In addition to this, the first and the second primers are applied as one step, while keeping control of any decline in manageability (coatability etc.) brought on by a reaction (polymerization, etc.) between the first and the second primers prior to be applied onto the coating film.

According to the present invention as defined in claim 6, the coating film is formed on an automobile body panel, and therefore, if the automobile body panel is the substrate, an object to be bonded can be bonded thereto using an organic adhesive.


Fig. 1 is a perspective view of an automobile body panel used as the substrate;
Fig. 2 is a descriptive diagram depicting the sequence of steps pertaining to the first embodiment;
Fig. 3 is a descriptive diagram which conceptually illustrates the relationship between the coating film and primer film layers pertaining to the first embodiment, which are laminated onto an automobile body panel;
Fig. 4 is a diagram illustrating a state whereby polluting substances have adhered to a hydrophilized coating film;
Fig. 5 is a descriptive diagram illustrating the process of rainwater or the like washing polluting substances off a hydrophilized coating film;
Fig. 6 is a diagram illustrating an operational state which is a continuation from Fig. 5;
Fig. 7 is a conceptual diagram illustrating the relationship of the bonds between primers (the body primer in the first embodiment and the first primer in the second embodiment) and a hydrophilized coating film;
Fig. 8 is a conceptual diagram illustrating how the secure bonding relationship depicted in Fig. 7 can be maintained, despite the presence of water or the like;
Fig. 9 is a descriptive diagram depicting the sequence of steps pertaining to the second embodiment;
Fig. 10 is a descriptive diagram which conceptually illustrates the relationship between the coating film and primer film layers pertaining to a second embodiment, which are laminated onto an automobile body panel; and
Fig. 11 is a descriptive diagram illustrating a manual peeling test.


Embodiments pertaining to the present invention shall be described below with reference to the drawings.

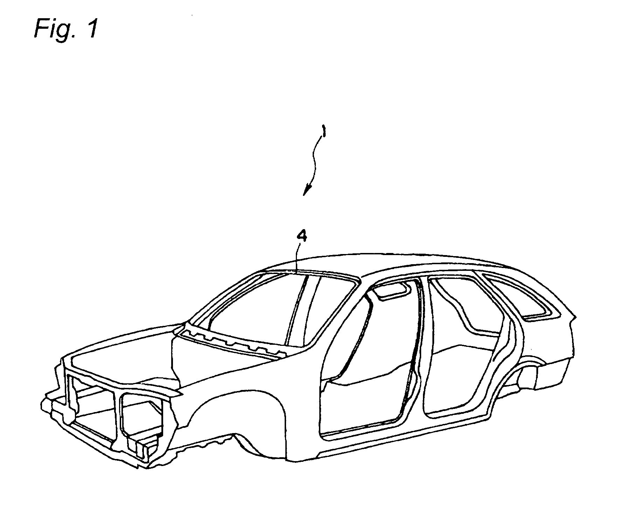

Figs. 1 to 8 depict the first embodiment. This first embodiment illustrates the case where a window glass (object to be bonded) 14 is bonded to an automobile body panel (substrate) 1, which has been furnished with a hydrophilized coating film, at the edge of the opening where a window glass is to be bonded (referring to the areas where the object is to be bonded; in the present embodiment, it is furnished on the front and rear areas) 4, using a window glass adhesive (organic adhesive) 16.

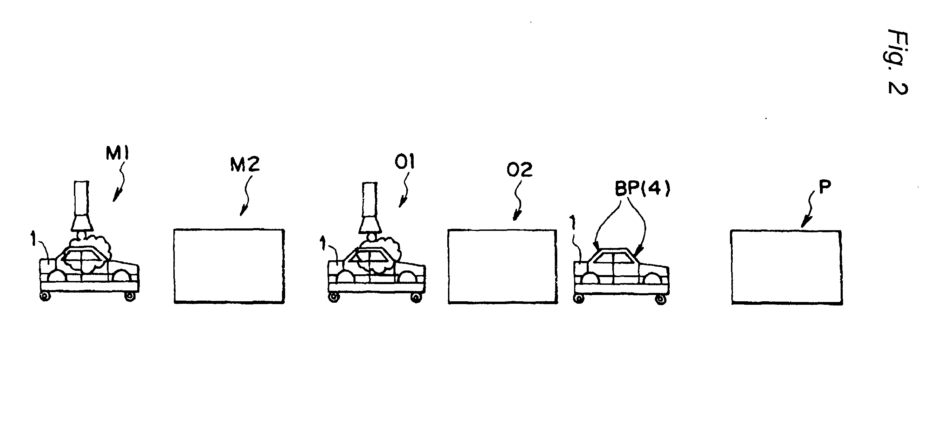

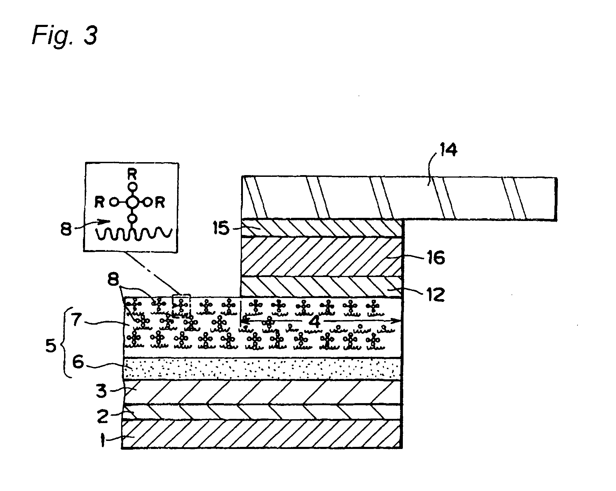

A more detailed description follows. First, as is conventionally known in the art, an automobile body panel 1 such as is illustrated in Fig. 1 is sequentially subjected to an base-coat coating treatment (which is not shown, but which comprises an base-coat coating step and a baking step (e.g., for 30 min at 160°C)) and an middle-coat coating treatment (comprising middle-coat coating step M1 and baking step (e.g., 20 min at 140°C) M2), as illustrated in Fig. 2. Next, the base-coat coating film 2 and the middle-coat coating film 3 are formed in layered manner on the automobile body panel 1, as illustrated in Figure 3, whereupon, inclusive of the edge of the opening where the window glass is to be bonded 4, a complete top-coat coating treatment (comprising top-coat coating step O1 and baking step (e.g., 20 min at 140°C) 02) is performed (as in Fig. 2) on the middle-coat coating film 3. The top-coat coating film 5 is formed to provide the automobile body panel 1 with a finished surface.

The top-coat coating treatment comprises two stages. The first stage top-coat coating treatment comprises forming an top-coat base coating film 6 (first coating film) and the second stage top-coat coating treatment comprises covering the top-coat base coating film 6 with a clear top-coat coating film 7 (second coating film). The second stage top-coat coating treatment is performed before the top-coat base coating film 6 obtained in the first stage top-coat coating treatment has cured (known as "wet on wet").

Any well-known coating can be used to form the aforedescribed top-coat base coating film 6 (e.g., combinations of an amino resin and an acrylic and/or polyester resin; more specifically, acrylic resin/amino resin, polyester resin/amino resin, acrylic resin-polyester resin/amino resin and the like), and any well-known coating resin (e.g., an acrylic melamine-urethane-acid/epoxy system coating) which contains an organosilane compound; i.e., a silicate compound $RO(Si(OR)_2)_nOR$ (where n is an integer from 1 to 70 and R is hydrogen or an organic group with 1 to 50 carbons, or contains all or a part of the aforedescribed coating resin), as a hydrophilizing agent 8 in a uniformly dispersed state can be used to form the aforedescribed clear top-coat coating film 7. This configuration allows the clear top-coat coating film 7 to contain the hydrophilizing agent 8 in an uniformly dispersed state, the presence of which imparts hydrophilic property to the clear top-coat coating film 7 as long as the clear top-coat coating film 7 is present, thereby enables it to function as a hydrophilized coating film. The fact that the hydrophilizing agent 8 is uniformly dispersed within the coating film (coating) enables the coating film to be enhanced by the hydrophilizing agent.

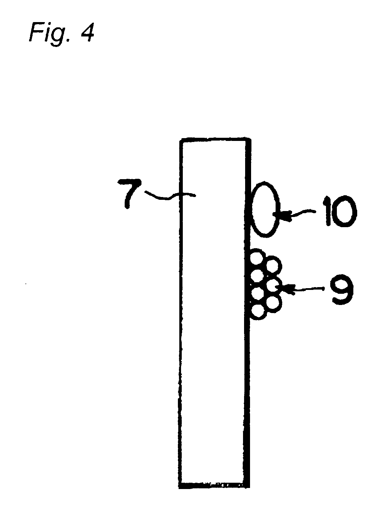

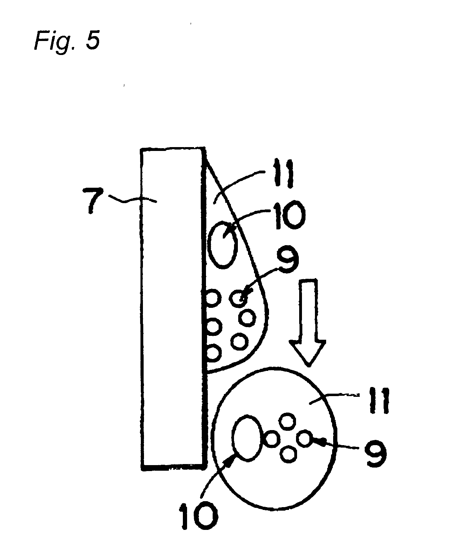

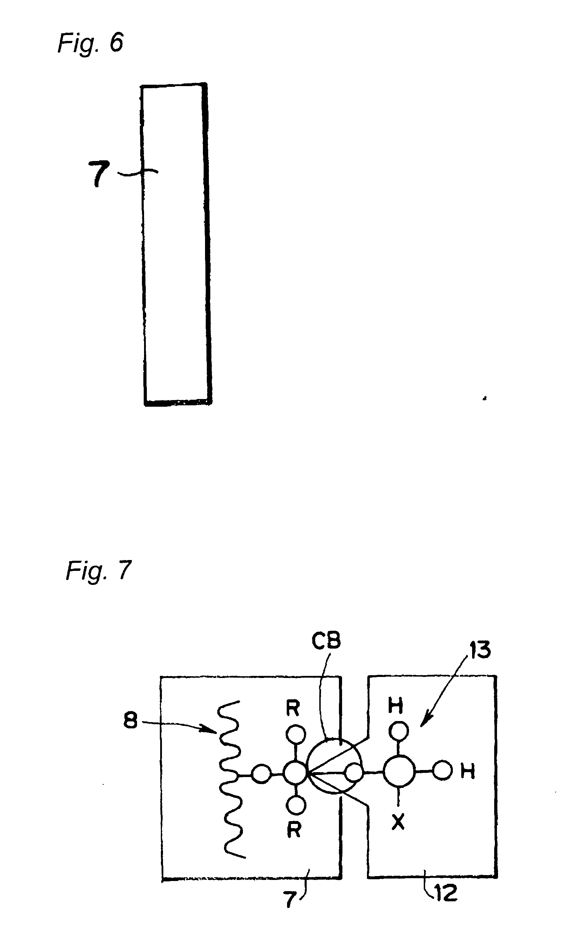

Even if any hydrophilic polluting substances (e.g., dust) 9 or lipophilic polluting substances (e.g., soot and smoke) 10 adhere to the clear top-coat coating film 7 (Fig. 4), a supply of rain or other form of water 11 will permeate between the clear top-coat coating film 7 and the various polluting substances 9, 10 (Fig. 5), and, due to the hydrophilic property which has been imparted to the clear top-coat coating film 7, will wash off the hydrophilic polluting substances 9 as well as the lipophilic polluting substances 10 (Fig. 6), thereby reducing the amount of any washing to be done.

Next, as illustrated in Figs. 2 and 3, a body primer film (primer film) 12 is formed on the clear top-coat coating film 7 by applying a body primer (primer) to the edge of the opening where the window glass is to be bonded 4 (Fig. 1) (body primer treatment step BP). This step is performed in order to enhance the adhesion of the window glass adhesive 16 to the clear top-coat coating film 7.

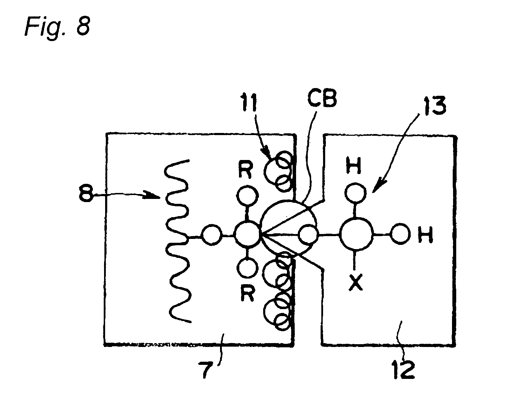

The body primer contains both organic reactive groups which can react with organic resins and an additive 13 which can form covalent bonds with the hydrophilizing agent within the clear top-coat coating film 7. This ensures not only that the body primer film 12 will be able to bond with the window glass adhesive 16 which is used as an organic adhesive, via the organic reactive groups, but that the covalent bonds CB between the hydrophilizing agent 8 in the aforedescribed clear top-coat coating film 7 and the additive 13 in the body primer film 12, as illustrated in Fig. 7, will ensure a bond that cannot be broken by a film of water, even between the clear top-coat coating film 7 used as the hydrophilized coating film and the body primer film 12. The hydrophilic property of the clear top-coat coating film 7 will thereby reduce the amount of washing which may need to be done, and in addition, the bonds between the body primer film 12 and the clear top-coat coating film 7 will be securely maintained by the covalent bonds CB, as shown in Fig. 8, even if any water (e.g., rainwater) 11 ($H_2O$) attracted by the hydrophilic property of the clear top-coat coating film 7, penetrates between the clear top-coat coating film 7 and the body primer film 12.

Specifically, the body primer may be those which comprise 0.1 to 10% by weight of organosilane compound; i.e., a silane coupling agent, 2 to 20% by weight of carbon black as a pigment, and 70 to 97.9% by weight of alcohol medium as a solvent when an organosilane compound; i.e., a silicate compound $RO(Si(OR)_2)_nOR$, is used as the hydrophilizing agent 8 in the coating which forms the aforedescribed clear top-coat coating film 7, and an organic adhesive is used as the window glass adhesive 16. The aforedescribed silane coupling agent is typically represented as $XSi(OR)_3$, where X is vinyl, methacrylic, epoxy, amino, mercapto or other organic reactive group which can react with an organic resin and R is a methyl, ethyl or other alkyl group.

This configuration allows the relationship with the silicate compound used for the hydrophilizing agent 8 to be such that the Si-OR in the silicate compound $RO(Si(OR)_2)_nOR$ forms with the Si-OR in the silane coupling agent $XSi(OR)_3$ in the body primer in the presence of humidity or moisture present in the air, covalent bonds which cannot be broken by a film of water 11.

That is, the silane coupling agent $XSi(OR)_3$ causes the following reaction in the presence of humidity or moisture in the air.

$$X\text{-}Si(OR)_3 + 3H_2O \rightarrow X\text{-}Si(OH)_3$$

The reaction product $X\text{-}Si(OH)_3$ is believed to form a covalent bond with the Si-OR in the silicate compound $RO(Si(OR)_2)_nOR$.

The window glass (Fig. 3) 14 is prepared while the aforedescribed automobile body panel 1 is being subjected to the treatments, and a window glass primer is applied on its periphery to form a window glass primer film 15. A window glass adhesive 16 is further applied to the window glass primer film 15. The window glass primer is applied in order to improve the adhesion between the window glass 14 and the window glass adhesive 16, and the window glass adhesive 16 is applied in order to allow the window glass 14 to adhere to the edge of the opening where the window glass is to be bonded 4.

The aforedescribed window glass primer is selected with a view towards improving the adhesion between the window glass 14, which is an inorganic material, and the window glass adhesive 16, which is an organic material.

In the present embodiment, the window glass primer is the same one used as the aforedescribed body primer; i.e., it comprises 0.1 to 10% by weight of organosilane compound; i.e., silane coupling agent, 2 to 20% by weight of carbon black as a pigment, and 70 to 97.9% by weight of alcohol medium as a solvent. Naturally, the aforedescribed silane coupling agent is typically represented as $XSi(OR)_3$, where X is a vinyl, methacrylic, epoxy, amino, mercapto or other organic reactive group which can react with an organic resin and R is a methyl, ethyl or other alkyl group.

The aforedescribed window glass adhesive 16 is selected in view of adhesion between the aforedescribed window glass primer film 15 and the aforedescribed body primer film 12 (both are the same in the present embodiment). A common one-part moist curing polyurethane adhesive is used in the present embodiment; i.e., the adhesive contains 10 to 54% by weight of prepolymer as a resin, 10 to 20% by weight of calcium carbonate as an inorganic filler, 10 to 40% by weight of carbon black as a pigment, 1 to 10% by weight of xylene as a solvent, dibutyltin laurate or the like and 5 to 20% by weight of DOP (dioctyl phthalate) as a plasticizer. A prepolymer used in the above configuration is that synthesized from polyol (e.g., polyoxypropylene triol or polyoxypropylene diol) and diisocyanate (e.g., tolylene diisocyanate (TDI) or 4-4'-diphenylmethane diisocyanate (MDI)), and contains isocyanate groups.

The aforedescribed window glass 14 is fitted to the automobile body panel 1 in a window glass assembling step P, after the body panel has finished being subjected to the aforedescribed body primer treatment step BP. In this assembling step, a robot or the like is used to fit the window glass 14 to the aforedescribed edge of the opening where the window glass is to be bonded 4, which has been coated with the body primer. In this step, the window glass adhesive 16 is bonded to the window glass 14, at the edge of the opening where the window glass is to be bonded 4, via the window glass primer, by means of the bonding between the isocyanate groups (-NCO) in the resin in the adhesive and the organic reactive groups (X) in the silane coupling agent in the window glass primer. The aforedescribed bonding relationship with the body primer also allows the window glass adhesive 16 to adhere to the aforedescribed clear top-coat coating film 7 (at the edge of the opening where the window glass is to be bonded 4 on the automobile body panel 1) via the body primer film 12.

According to the aforedescribed method, therefore, even if the automobile body panel 1 has been imparted with hydrophilic property by means of the clear top-coat coating film 7, the applying of the aforedescribed body primer to the clear top-coat coating film 7 will enable the window glass 14 to be securely bonded to the edge of the opening where the window glass is to be bonded 4 by using the window glass adhesive 16.

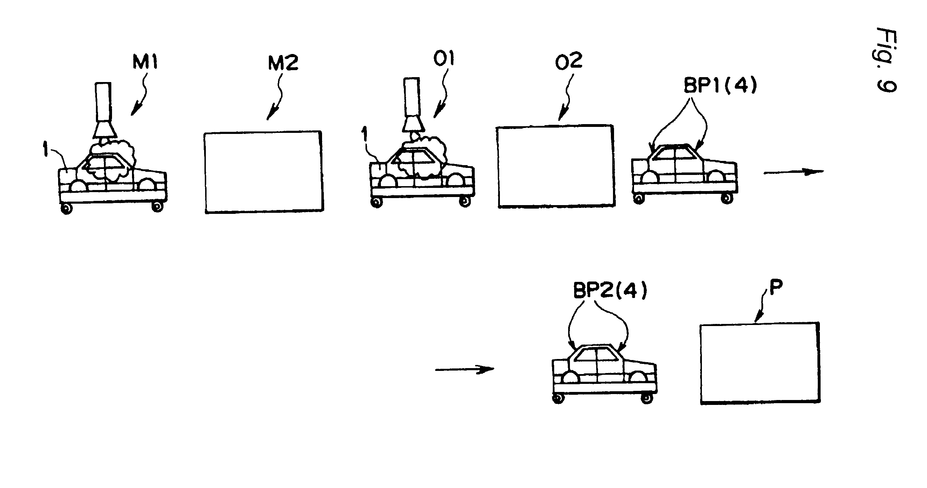

Figs. 9 to 10 illustrate the second embodiment. The structural elements and reference numbers are the same as in the previous embodiment, and their attendant descriptions are thus omitted here.

In this embodiment, regardless of whether the clear top-coat coating film 7 is hydrophilic or not, the bonding of the window glass 14 which is to be bonded is performed in the same process.

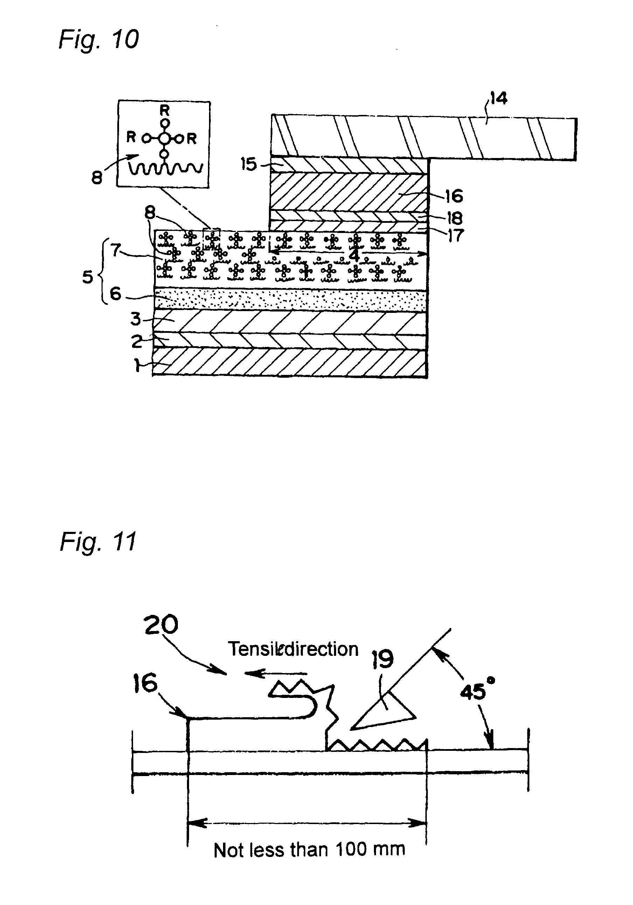

A more detailed description follows. In the present embodiment, as illustrated in Fig. 9, when the automobile body panel 1 has reached the primer coating step, having had the aforedescribed clear top-coat coating film 7 formed thereon after having finished being treated, as illustrated in Fig. 9, a first primer is applied to the clear top-coat coating film 7 to form a first primer film 17 thereon (Fig. 10), and a second primer is applied to the first primer film 17 to form a second primer film 18 (Fig. 10), at the edge of the opening where the window glass is to be bonded 4, regardless of whether the clear top-coat coating film 7 has hydrophilicity or not.

The first primer contains organic groups which can react with the organic resins, and an organosilane compound as an additive 13, while the second primer contains organic groups which can react with the organic resins, but not an organosilane compound (a body primer which is usually used on non-hydrophilized clear top-coat coating films 7). When an organosilane compound has been included as a hydrophilizing agent 8 in the clear top-coat coating film 7 to make it a hydrophilic coating film, then the organosilane compound 8 contained in said clear top-coat coating film 7 and the organosilane compound 13 contained in the first primer will form bonds (e.g, covalent bonds) CB between the clear top-coat coating film 7 and the first primer film 17 which are strong enough to resist being broken by the water (Fig. 7), while the organic reactive groups in each of the first and the second primers as well as in the window glass adhesive 16, which is included as an organic adhesive, will form respective bonds. Whereas, when the clear top-coat coating film 7 has not been made hydrophilic, then the second primer will permeate through the first primer to effect adhesion (chemical bonding) with the clear top-coat coating film 7, while the organic reactive groups in each of the first and the second primers as well as in the window glass adhesive 16 will form respective bonds. This configuration enables the primer coating steps to be performed as one, by having the window glass adhesive 16 adhere to the clear top-coat coating film 7 via the first and the second primers, not only when the clear top-coat coating film 7 is hydrophilic, but also when it is not hydrophilic.

Specifically, the material used for the first primer in the present embodiment is the same as that used as the body primer in the aforedescribed embodiment, while the material used for the second primer is the same as the existing body primer used on the non-hydrophilic clear top-coat coating film 7; i.e., the second primer may contain 1 to 20% by weight of isocyanate compounds and urethane resin as film forming agents, 2 to 20% by weight of carbon black as a pigment, and 60 to 97% by weight of ethyl acetate, toluene or the like as a solvent.

In the present embodiment, the second primer is preferably applied subsequent to the formation of the first primer film 17 on the clear top-coat coating film 7. If the first and the second primers are blended together prior to their application on the clear top-coat coating film 7, the first and the second primers react with each other (e.g., polymerization), and coatability, manageability, and the like become poor.

However, if the first and the second primers are blended together just before application, for example within 2 hours, preferably 1 to 1.5 hours before application, the reaction between the first and second primers does not reach critical level, thereby coatability and manageability do not become poor, and the blended primer may be applied to the clear top-coat coating film 7.

Next, in a similar manner to the aforedescribed embodiment, a window glass 14 is prepared by applying a window glass adhesive 16 to its periphery, by means of a window glass primer film 15. The glass is then fitted to the edge of the opening where the window glass is to be bonded 4 (which has been treated with the first and the second primers).

In the present embodiment, the above configuration allows the window glass adhesive 16 to adhere to the window glass at the edge of the opening where the window glass is to be bonded 4, by means of the window glass primer, through the action of bonding between isocyanate groups (-NCO) in the resin and organic reactive groups (X) in the silane coupling agent contained in the window glass primer. Moreover, for the first and the second primers, the action of bonding between isocyanate groups (-NCO) in the resin in the window glass adhesive 16, organic reactive groups (X) in the silane coupling agent contained in the first primer and isocyanate groups (-NCO) in the resin in the second primer, enable the window glass adhesive 16 to adhere to the aforedescribed clear top-coat coating film 7 (in the edge of the opening where the window glass is to be bonded 4 on the automobile body panel 1), by means of the first and the second primers.

Examples

Various primers were applied onto various clear top-coat coating film 7, and adhesion thereto of a window glass adhesive 16 was evaluated in order to provide proof for the scope of the aforedescribed embodiments.

The clear top-coat coating film 7 was formed on the outermost surface of a test plate. Two types of the clear top-coat coating film 7, namely hydrophilized and non-hydrophilized coating films, were prepared by blending a silicate compound (i.e., $CH_3O\text{-}(Si(OCH_3)_2)_{10}\text{-}CH_3$) into some of the films, and not blending it into the others.

The body primer of the first embodiment (a first primer in the second embodiment) and the second primer of the second embodiment (a conventional primer for use in non-hydrophilized coating films) were used alternatively or in combined form (in the latter case, the second primer was applied after the first primer had been applied).

The same organic adhesive used in the aforedescribed embodiment was used as the aforedescribed window glass adhesive 16.

A test piece 20 was prepared by applying a primer onto a clear top-coat coating film 7 on a test plate and then applying an adhesive 16 in the form of a round bead having $8 \pm 2$ mm in diameter and at least 100 mm long, onto the primer. The sample was maintained at room temperature for 7 days, and their initial properties (evaluated just after the 7 day period) and water resistance (the samples were immersed in $40 \pm 2°C$ warm water for 7 days) were evaluated by a manual peeling test. As illustrated in Fig. 11, the manual peeling test was conducted by making cut into a peeling surface, at a pitch of 2 to 3 mm and at an approximately 45 degree angle with a knife 19, while the adhesive was pulled in 180 degree direction, to determine whether or not the surface peeling had occurred. The results are shown in Table 1, with "o" indicating no surface peeling and "x" indicating surface peeling.

Table 1

| Combination of primer/adhesive | Second primer and adhesive | | First/second primer and adhesive | | First primer and adhesive | |
|---|---|---|---|---|---|---|
| Test | Initial | Water | Initial | Water | Initial | Water |
| Clear top-coat (hydrophilized) | X | X | O | O | O | O |
| Clear top-coat (non-hydrophilized) | O | O | O | O | X | X |

According to the results in Table 1, when the clear top-coat coating film 7 is hydrophilized coating film, the second primer (conventional primer for use in non-hydrophilized coating films) yielded poor results in both the initial properties and the water-resistance tests, that is, surface peeling. Whereas, surface peeling did not occur in either the initial properties or water-resistance tests when the first primer was used alone, or when the first and the second primers were both used, yielding a good result. These results are believed to have been significantly affected by whether or not the covalent bonds had been formed by the silicate compound (hydrophilizing agent) in the clear top-coat coating film 7 and the silicate compound in the first primer.

On the other hand, the non-hydrophilized clear top-coat coating films yielded good results in both the initial properties and the water-resistance tests either when the second primer (conventional primer for use in non-hydrophilized coating films) was used or when the first and second primers were both used. These results show that when both the first and the second primers are used, the fact that the second primer, which is effective on non-hydrophilized coating films, has permeated throughout the first primer is believed to contribute strongly to the adhesion with the clear top-coat coating film 7. The first primer is effective on hydrophilized coating films, but it does not contain any reactive groups which will bond with the non-hydrophilized coating film, and thus surface peeling occurred in the initial properties and the water-resistance tests.

The present invention has been described in the foregoing with reference to the embodiments; however, the present invention may be applied to other objects to be bonded; e.g., exterior parts such as a side protector, in addition to window glass.

The object of the present invention is not limited to that which has been described in the foregoing; it can incorporate any configuration which provides an essentially preferred or otherwise merited result.

**Claims**

1.   A method for treating coating film which contains a hydrophilizing agent, to be conducted before an object is bonded to the coating film with an organic adhesive, which comprises a step of applying a primer to the coating film, wherein
     said primer has an organic reactive group reactable with organic elements, and contains an additive capable of forming a covalent bond with the hydrophilizing agent in the coating film.

2.   The method for treating coating film according to claim 1, wherein said hydrophilizing agent in the coating film is an organosilane compound, and said primer has an organic reactive group reactable with organic elements, and contains an organosilane compound as an additive.

3.   A method for treating coating film, to be conducted before an object is bonded to the coating film with an organic adhesive, which comprises a step of applying a primer to the coating film, wherein
     said primer is composed of a first primer which has an organic reactive group reactable with organic elements, and contains an organosilane compound as an additive, and a second primer which has an organic reactive group reactable with organic elements, and contains no organosilane compound.

4.   The method for treating coating film according to claim 3, wherein the first primer is applied onto the coating film to form a first primer film on the coating film, and the second primer is applied onto the first primer film.

5.   The method for treating coating film according to claim 3, wherein the first primer and the second primer are blended just before being applied onto the coating film.

6.   The method for treating coating film according to any one of claims 1 to 5, wherein said coating film is formed on an automobile body panel.

Fig. 1

*Fig. 2*

*Fig. 3*

*Fig. 4*

Fig. 5

*Fig. 6*

7

*Fig. 7*

CB

13

8

R

R

H

H

X

7

12

*Fig. 8*

Fig. 9

*Fig. 10*

*Fig. 11*

Tensile direction

Not less than 100 mm

45°